# EUROPÄISCHE PATENTSCHRIFT

(11) **EP 0 932 572 B1**
(45) Veröffentlichungstag und Bekanntmachung des Hinweises auf die Patenterteilung: **19.09.2001**
(21) Anmeldenummer: 97913089.5
(22) Anmeldetag: 08.10.1997
(51) Int. Cl.: B65H 29/04, B65G 47/64

(54) **FÖRDEREINRICHTUNG**
CONVEYOR
CONVOYEUR

(30) Priorität: 12.10.1996 DE 19642126
(43) Veröffentlichungstag der Anmeldung: 04.08.1999
(73) Patentinhaber: Koenig & Bauer Aktiengesellschaft, 97080 Würzburg (DE)
(72) Erfinder: RATZ, Holger, D-67227 Frankenthal (DE); STÄB, Rudolf, D-67227 Frankenthal (DE)
(86) Internationale Anmeldenummer: DE9702301
(87) Internationale Veröffentlichungsnummer: WO9816454

(56) Entgegenhaltungen:
- CH-A- 667 636
- CH-A- 680 921
- DE-A- 4 403 273
- PATENT ABSTRACTS OF JAPAN vol. 005, no. 162 (M-092), 17.Oktober 1981 & JP 56 088011 A (TANAKA MASAHIDE), 17.Juli 1981,

## Beschreibung

Die Erfindung betrifft eine räumlich führbare Fördereinrichtung entsprechend dem Oberbegriff der Ansprüche 1 und 5.

Durch die CH 6 80 921 A5 ist eine räumlich führbare Fördereinrichtung zum Transport von Zeitungs- sowie Buch- und Zeitschriftendruckerzeugnissen bekannt.

Nachteilig bei dieser Fördereinrichtung ist, daß das Fördergut nur an einem Zielort abgebbar ist.

Die CH 667 636 A5 beschreibt eine Einrichtung zum überführen von Druckprodukten in einen gewendelten Stapel. Dazu ist ein ortsveränderbarer Zwischenförderer mit biegsamen Führungsschienen vorgesehen.

Die JP-A-56-088011 offenbart eine richtungsveränderbare Fördereinrichtung.

Der Erfindung liegt die Aufgabe zugrunde, eine eine endlose Transportkette mit Klemmvorrichtungen für Druckprodukte aufweisende Fördereinrichtung zu schaffen, mit der es möglich ist, von ihr geführte Druckprodukte wahlweise an verschiedene Zielorte abzugeben.

Diese Aufgabe wird erfindungsgemäß durch Merkmale des kennzeichnenden Teils der Ansprüche 1 und 5 gelöst.

Die mit der Erfindung erzielbaren Vorteile bestehen insbesondere darin, daß die mit der räumlich geführten Fördereinrichtung geförderten Druckprodukte an oder vor - d. h. in Förderrichtung der Druckprodukte gesehen - einer falzapparatfernen Umlenk-Vorrichtung oder in der Nähe wahlweise an verschiedenen Zielorten abgegeben werden können. Diese Zielorte können z. B. mehrere parallel in einer Ebene zueinander verlaufende Förderbänder sein. Besonders vorteilhaft dabei ist, daß die Abgabe der Druckprodukte jeweils in Transportrichtung der Förderbänder erfolgen kann.

Nach einer anderen Ausführungsvariante ist es vorteilhaft auch möglich, die Zielorte zur Abgabe der Druckprodukte in verschiedenen Ebenen vorzusehen. Das gelingt nach der Erfindung dadurch, daß der "Kopf" der Fördereinrichtung mit einem räumlich bewegbaren Tragarm gelenkig verbunden ist. Soll der Zielort der Druckprodukte gewechselt werden, so muß dabei die Laufgeschwindigkeit der Transportkette nicht verringert werden.

Ein Ausführungsbeispiel der Erfindung ist in der Zeichnung dargestellt und wird im folgenden näher beschrieben.

Es zeigen
- Fig. 1: die schematische Darstellung der Seitenansicht der Fördereinrichtung;
- Fig. 2: die Draufsicht auf die Fördereinrichtung nach Fig. 1;
- Fig. 3: eine Ansicht A nach Fig. 1 mit einer vergrößerten Darstellung der in Führungselementen geführten Transportkette.

Eine räumlich geführte Fördereinrichtung 5 zum Transportieren von Druckprodukten 1 besteht z. B. aus einer endlosen Transportkette 2 und sich jeweils in Förderrichtung und zurück erstreckenden starren, z. B. vier stabförmigen Führungselementen 16, 17, 18, 19. Die Führungselemente 16 bis 19 sind - im Querschnitt gesehen - die Eckpunkte eines Quadrates. Die vier Führungselemente 16 bis 19 werden in Abständen von etwa der 1,5-fachen Länge eines Kettengliedes 7 mittels einer z. B. ringförmigen Klammer 21 auf einem vorbestimmten Abstand zueinander gehalten.

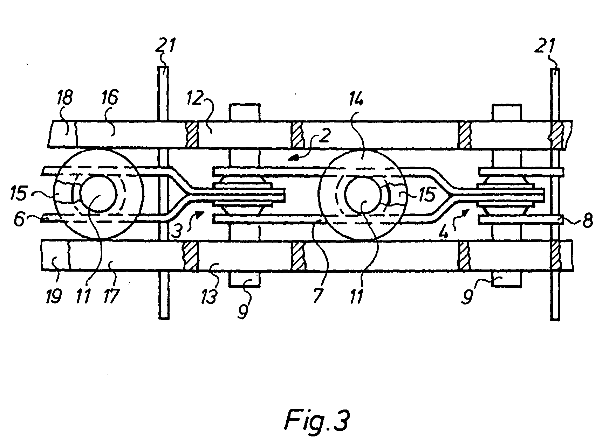

Diese Transportkette 2 weist eine Vielzahl von mittels Gelenken 3, 4 verbundenen Kettengliedern 6, 7, 8 auf. Jedes Kettenglied 6, 7, 8 weist zwei Achsen 9, 11 auf (Fig. 3). Auf jeder Achse 9, 11 sind paarweise Rollen 12, 13; 14, 15 angeordnet. Die beiden Achsen 9, 11 eines jeden Kettengliedes 6 bis 8 sind kreuzweise, d. h. in einem Winkel von 90° zueinander versetzt angeordnet, so daß sich einerseits die Rollen 12, 13 der Achse 9 zwischen den Führungselementen 16, 18 bzw. 17, 19 abstützen und sich andererseits die Rollen 14, 15 der Achse 11 zwischen den Führungselementen 16, 17 bzw. 18, 19 abstützen.

Nicht näher dargestellte, an den Kettengliedern 6 bis 8 befestigte Klemmvorrichtungen können jeweils ein Druckprodukt 1 aufnehmen.

Die Fördereinrichtung 5 besteht:
1. im wesentlichen aus einer falzapparatnahen, - z. B. auch in den Ausgang des Falzapparates integrierte, nicht dargestellte Umlenk-Vorrichtung zur Führung und Richtungsumlenkung der endlosen Transportkette 2. Eine falzapparatferne Umlenk-Vorrichtung 24 kann aus einem gestellfesten Umlenkrad 51 bestehen und einer Einrichtung zum öffnen und Schließen der Klemmeinrichtungen der Transportkette 2. Die Klemmeinrichtungen der Transportkette 2 übernehmen die Druckprodukte 1 aus dem Falzapparat und transportieren sie längstens bis zu der falzapparatfernen Umlenk-Vorrichtung 24 für die Transportkette 2;
2. aus einer Führungsstrecke für die Transportkette 2 zwischen den beiden voneinander entfernten falzapparatnahen und -fernen Umlenk-Vorrichtungen. Der größte Teil der Führungsstrecke ist starr und am Gebäude befestigt. Lediglich eine erste Teilführungsstrecke 23 vor der falzapparatfernen Umlenk-Vorrichtung 24 ist teilweise selbst beweglich und damit zusammen mit der Umlenk-Vorrichtung 24 zur Abgabe der Druckprodukte 1 horizontal und/oder vertikal bewegbar. Außerdem ist eine Einrichtung zum öffnen und Schließen der Klemmeinrichtungen der Transportkette 2 zur Abgabe der Druckprodukte 1 auf wahlweise eines von mehreren Transportbändern 44, 46, 47 vorgesehen.
   Die bewegliche und bewegbare erste Teilführungsstrecke 23 beginnt am starren Ende 10 des starren Teils der zweiten Teilführungsstrecke 35 der Fördereinrichtung 5;
3. aus der o. g. Transportkette 2. Sie ist vorzugsweise in allen Richtungen (aufwärts, abwärts, linksseits, rechtsseits) beweglich und bewegbar. Dieses gilt auch für die beweglichen Zwischenführungsstücke 22, 26.

Die schwenkbare, bewegliche Teilführungsstrecke 23 sowie die bewegbare Umlenk-Vorrichtung 24 haben zumindest in der Höhe des unteren 25 sowie des oberen Trums 30 der Fördereinrichtung 5 stabförmige Führungselemente 16 bis 19.

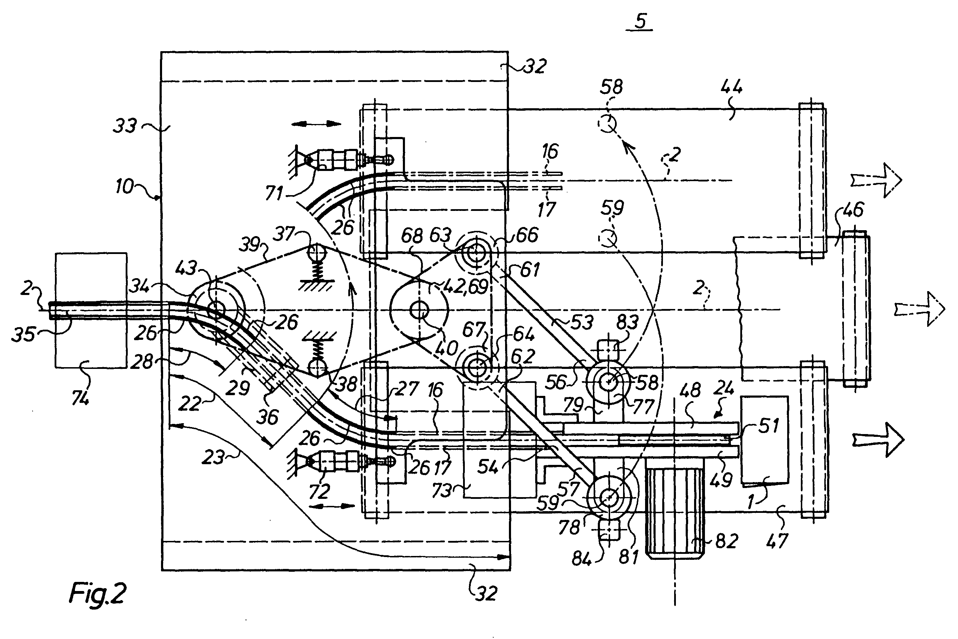

Wie aus Fig. 2 zu ersehen, besteht die erste Teilführungsstrecke 23 aus einem konkaven, beweglichen, gekrümmten ersten Zwischenführungsstück 22 und einem beweglichen, konvexen, gekrümmten zweiten Zwischenführungsstück 26. Am ersten 23 und zweiten Zwischenführungsstück 26 ist ein erstes starres Führungsstück angeschlossen. An das zweite Zwischenführungsstück 26 ist ein zweites starres Führungsstück angeschlossen, das wiederum bis unmittelbar zum Umlenkrad 51 reicht und an der Umlenk-Vorrichtung 24 befestigt ist. Das eben beschriebene Beispiel der Führungen für die Teilführungsstrecke 23 gilt für sowohl für das untenliegende Last-Trum 25 mit den eingeklemmten Druckprodukten 1, wie auch für das obenliegende von den Druckprodukten 1 entleerte Zugtrum 30 der Transportkette 2. Bei Bewegung der Umlenk-Vorrichtung 24 von einem ersten Auslageband 47 zu einem letzten Auslageband 44 (siehe Fig. 2), wird aus der konkaven Krümmung des ersten Zwischenführungsstückes 22 eine konvexe Krümmung. Beim zweiten Zwischenführungsstück 26 wird aus der konvexen Krümmung eine konkave Krümmung.

Die beweglichen führenden Zwischenführungsstücke 22; 26 werden ebenfalls mittels Klammern 21 auf einen vorbestimmten Abstand zusammengehalten.

Es ist durchaus möglich, statt der im Kurvenbereich 27 angeordneten beweglichen Zwischenführungsstücke 26 über den Auslagebändern 47, 44 nicht dargestellte stationäre Führungen anzuordnen. Diese Führungen können jeweils plattenförmig ausgebildet sein und vor dem Verschwenken der Umlenk-Vorrichtung 24 in vertikaler Richtung abgesenkt werden. Somit sind nur Teile der Vorrichtung bewegbar. Das erste Zwischenführungsstück 22 kann z. B. aus einer kurbelförmigen Welle 29 bestehen, deren erstes Ende 31 in einer seitengestellfesten Brücke 32, 33 drehbar gelagert und mit einem Zahnriemenrad 34 versehen ist. Das zweite Ende 36 der kurbelförmigen Welle 29 ist gabelförmig ausgebildet und trägt im geraden Bereich des oberen sowie unteren Trums 25; 30 der Fördereinrichtung 5 stabförmig bzw. starre Führungselemente 16 bis 19. Im kurvenförmigen Bereich 28 der Teilführungsstrecke 23 sind wiederum flexible Zwischenführungsstücke 26 eingesetzt. Die flexiblen Zwischenführungsstücke 26 sind, wie bereits beschrieben, mit dem geraden Teil eines jeden stabförmigen Führungselementes 16 bis 19 verbunden.

Da die oberen und unteren Zwischenführungsstücken 22; 26 zumindest in einer horizontalen Ebene B schwenkbar ausgebildet sind, - z. B. um einen Winkel von 90° -, ist das Zahnriemenrad 34 mittels eines über Spannrollen 37, 38 geführten Zahnriemens 39 mit einem auf der Welle 40 eines Motors 41 befestigen Zahnriemenrades 42 verbunden. Der Motor 41 ist mit seinem Gehäuse drehfest auf einem Schlitten 52 angeordnet, welcher auf der seitengestellfesten Brücke 33 in Transportrichtung der Förderbänder 44, 46, 47 sowie in Gegenrichtung hin- und herbeweglich angeordnet ist.

Durch Betätigen des Motors 41 in Gegenuhrzeigerdrehrichtung kann die Teilführungsstrecke 25 aus einer rechten Position (Fig. 2) in eine linke Position verschwenkt werden (gestrichelt dargestellt).

Dabei ergeben sich Zwisehen den beiden Positionen eine Vielzahl von sternförmigen zur Schwenkachse 43 der Führung 23 angeordnete mögliche Abgabestellen für Druckprodukte 1 (nicht dargestellt).

Die Umlenk-Vorrichtung 24 besteht aus zwei Halteplatten 48, 49 und auf einer Welle 50 zwischen den Halteplatten 48 49 drehbar gelagerten Umlenkrad 51. Ein Bewegen der Umlenk-Vorrichtung 24 erfolgt mittels zweier parallel zueinander angeordneter verschwenkbarer Tragarme 53, 54. Die Tragarme 53, 54 weisen an ihrem halteplattennahen Ende 56, 57 Linearführungen 77, 78 auf. Die Linearführungen 77, 78 bewegen sich gleitend auf vertikal angeordneten Spindeln 58, 59. Die Spindeln 58, 59 sind an ihren unteren Enden fest in Stützen 79, 81 gehalten. Die Stützen 79, 81 sind an den Halteplatten 48, 49 befestigt. An jeder Stütze 79, 81 ist das Gehäuse eines Arbeitszylinders 83, 84 befestigt, dessen Kolbenstangenende jeweils an der Linearführung 77, 78 gelagert ist. Ein seitengestellnahes Ende 61, 62 der Tragarme 53, 54 ist jeweils drehfest mit einem ersten Ende einer in dem Schlitten 52 gelagerten Welle 63, 64 verbunden. Auf einem zweiten Ende jeder Welle 63, 64 ist jeweils ein Zahnriemenrad 66, 67 befestigt. Jedes Zahnriemenrad 66, 67 wird mittels eines zweiten Zahnriemens 68 von einem ebenfalls auf der Welle 40 des Motors 41 fest aufgebrachten Zahnriemenrad 69 angetrieben.

Der Schlitten 52 ist mittels nichtdargestellter Linearführungen auf der Brücke 33 gegen die Kraft von pneumatisch betätigbaren Kolben-Zylindereinheiten 71, 72 hin- und herbewegbar angeordnet.

Die Arbeitsweise der Fördereinrichtung mit der bewegbaren Umlenk-Vorrichtung 24 ist wie nachfolgend beschrieben. Die an den Kettengliedern 6 bis 8 der Transportkette 2 hängenden Druckprodukte 1 werden z. B. mittels eines nicht näher dargestellten bekannten öffnungsmechanismus 73 von den Kettengliedern 6 bis 8 gelöst und auf dem Förderband 47 abgelegt. Sollen nun die Druckprodukte 1 auf einem anderen, z. B. dem Förderband 44 ausgelegt werden, so werden die Druckprodukte 1 an einer bekannten Makulaturweiche 74 ausgeschleupt, bis der Umstellvorgang abgeschlossen ist.

Die von dem Motor 41 des Zahnriemengetriebes 76 angetriebenen Zahnriemenräder 34 sowie 66, 67 sorgen für ein synchrones Verschwenken sowohl der kurbelförmigen Welle 29 der schwenkbaren Führung 23 als auch der beiden Tragarme 53, 54 für die Umlenkvorrichtung 24. Dabei wird der Schlitten 52 auf der Brücke 33 in zwei Richtungen hin- und herbewegt. Dabei bleibt die mit Betriebsgeschwindigkeit umlaufende Transportkette 2 immer gespannt.

Nachdem die Umlenk-Vorrichtung 24 mit der Transportkette 2 seine Stellung über dem Förderband 44 eingenommen hat, wird die Makulaturweiche 74 deaktiviert, so daß die Druckprodukte 1 nunmehr auf dem Förderband 44 abgelegt werden. Die Umlenk-Vorrichtung 24 ist in ihrer Produktionsstellung verriegelbar.

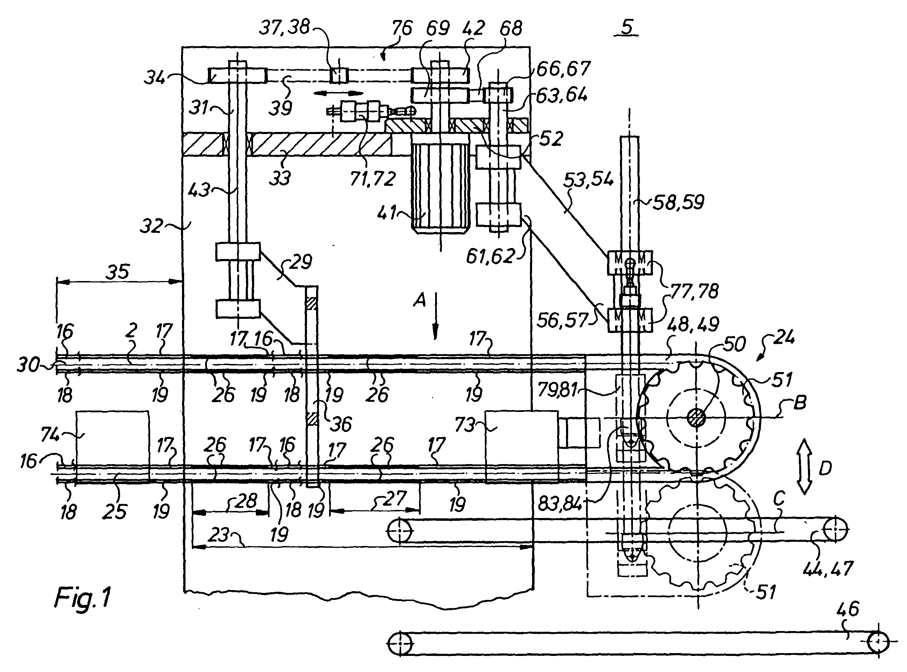

Nach einer zweiten Ausführungsvariante kann die Umlenk-Vorrichtung 24 auch noch in vertikaler Richtung D bewegbar ausgebildet sein. Das wird z. B. dadurch erreicht, daß die Umlenk-Vorrichtung 24 mittels der Arbeitszylinder 83, 84 aus der ersten horizontalen Ebene B in die zweite horizontale Ebene C verbringbar ist (Fig. 1). Somit steht die Umlenk-Vorrichtung 24 über dem mittig zwischen den beiden Förderbändern 44, 47 befindlichen, gestrichelt dargestellten Förderband 46 (Fig. 2).

Nach einer dritten Ausführungsvariante ist es auch möglich, den Kurvenbereich 28 sowohl in horizontaler Richtung B als auch in vertikaler Richtung D bewegbar auszubilden. Dies kann z. B. dadurch erfolgen, daß flexible Führungselemente angeordnet sind. Das Ende der Umlenk-Vorrichtung 24 kann z. B. auch von Hand über einem gewünschten Zielort angeordnet und an beliebigen bekannten Halteelementen befestigt werden.

Das Umlenkrad 51 kann über seine Welle 50 mit einem Antrieb, z. B. einem Motor 82 verbunden sein.

Die erfindungsgemäße Einrichtung kann sowohl in Verbindung mit Falzapparaten wie auch mit sog. "Cuttern" angewendet werden, d. h. also in Verbindung mit allen gefalzte oder nicht gefalzte Signaturen oder Blätter abgebenden Vorrichtungen.

Bezugszeichenliste
- 1: Druckprodukt
- 2: Transportkette
- 3: Gelenk (2)
- 4: Gelenk (2)
- 5: Fördereinrichtung
- 6: Kettenglied (2)
- 7: Kettenglied (2)
- 8: Kettenglied (2)
- 9: Achse (6, 7, 8)
- 10: Ende, starr (35)
- 11: Achse (6 7, 8)
- 12: Rolle (9)
- 13: Rolle (9)
- 14: Rolle (11)
- 15: Rolle (11)
- 16: Führungselement, starr
- 17: Führungselement, starr
- 18: Führungselement, starr
- 19: Führungselement, starr
- 20: -
- 21: Klammer (16 bis 19)
- 22: Zwischenführungsstück, erstes
- 23: Teilführungsstrecke (5)
- 24: Umlenk-Vorrichtung, verfahrbar (2)
- 25: Trum, unteres (2)
- 26: Zwischenführungsstück, zweites
- 27: Kurvenbereich (23, 24)
- 28: Kurvenbereich (23)
- 29: Welle, kurbelförmig (23)
- 30: Trum, oberes (2)
- 31: Ende, erstes (29)
- 32: Seitengestell
- 33: Brücke (32)
- 34: Zahnriemenrad (31)
- 35: Teilführungsstrecke, starr (5)
- 36: Ende, zweites (29)
- 37: Spannrolle
- 38: Spannrolle
- 39: Zahnriemen
- 40: Welle (41)
- 41: Motor
- 42: Zahnriemenrad
- 43: Schwenkachse (23, 29)
- 44: Förderband
- 45: -
- 46: Förderband
- 47: Förderband
- 48: Halteplatte (24)
- 49: Halteplatte (24)
- 50: Welle (51)
- 51: Umlenkrad
- 52: Schlitten
- 53: Tragarm (22)
- 54: Tragarm (22)
- 55: -
- 56: Ende, halteplattennah (53)
- 57: Ende, halteplattennah (54)
- 58: Spindel
- 59: Spindel
- 60: -
- 61: Ende, seitengestellnah (53)
- 62: Ende, seitengestellnah (54)
- 63: Welle
- 64: Welle
- 65: -
- 66: Zahnriemenrad (63)
- 67: Zahnriemenrad (64)
- 68: Zahnriemen
- 69: Zahnriemenrad
- 70: -
- 71: Kolben-Zylindereinheit
- 72: Kolben-Zylindereinheit
- 73: öffnungsmechanisums
- 74: Makulaturweiche
- 75: -
- 76: Zahnriemengetriebe
- 77: Linearführung
- 78: Linearführung
- 79: Stütze (48)
- 80: -
- 81: Stütze (49)
- 82: Motor (24)
- 83: Arbeitszylinder (79)
- 84: Arbeitszylinder (81)
- B: Ebene, horizontal
- c: Ebene, horizontal
- D: Bewegungsrichtung, vertikal (22)

## Patentansprüche

1. Fördereinrichtung (5) mit einer in einer starren Teilführungsstrecke (35) geführten endlosen Transportkette (2) für Druckprodukte (1) von einem Falzapparat bzw. Cutter aus und mit einer falzapparat-bzw. cutternahen und einer falzapparat- bzw. cutterfernen Umlenk-Vorrichtung (24) der Transportkette (2), wobei die Umlenk-Vorrichtung (24) horizontal von einer ersten in eine zweite Position bewegbar ist, **dadurch gekennzeichnet, daß** eine Teilführungsstrecke im Bereich der falzapparat- bzw. cutterfernen Umlenk-Vorrichtung (24) in der ersten und zweiten Position der Umlenk-Vorrichtung (24) parallel verlaufend angeordnet ist.

2. Fördervorrichtung nach Anspruch 1, **dadurch gekennzeichnet, daß** die Teilführungsstrecke im Bereich der falzapparat- bzw. cutterfernen Umlenk-Vorrichtung (24) in allen Positionen parallel verlaufend angeordnet ist.

3. Fördervorrichtung nach Anspruch 1, **dadurch gekennzeichnet, daß** der ersten und zweiten Position der Umlenk-Vorrichtung (24) parallel verlaufende Förderbänder (44; 46; 47) zugeordnet sind.

4. Fördereinrichtung nach Anspruch 1, **dadurch gekennzeichnet, daß** zwischen der starren Teilführungsstrecke (35) und der Umlenk-Vorrichtung (24) eine horizontal bewegbare Teilführungsstrecke (23) vorgesehen ist.

5. Fördereinrichtung (5) mit einer in einer starren Teilführungsstrecke (35) geführten endlosen Transportkette (2) für Druckprodukte (1) von einem Falzapparat bzw. Cutter aus und mit einer falzapparat-bzw. cutternahen und einer falzapparat- bzw. cutterfernen Umlenk-Vorrichtung (24) der Transportkette (2), wobei die Umlenk-Vorrichtung (24) horizontal von einer ersten in eine zweite Position bewegbar ist, **dadurch gekennzeichnet, daß** die Umlenk-Vorrichtung (24) und eine ortsfeste Teilführungsstrecke (35) mittels einer horizontal, relativ zur Teilführungsstrecke (35) bewegbaren Teilführungsstrecke (23) verbunden ist und daß die Umlenk-Vorrichtung (24) vertikal bewegbar ist.

6. Fördereinrichtung nach Ansprüchen 4 und 5, **dadurch gekennzeichnet, daß** die Teilführungsstrecke (23) zumindest teilweise aus beweglichen, krümmbaren Zwischenführungsstücken (22; 26) besteht.

7. Fördereinrichtung nach den Ansprüchen 4 und 5, **dadurch gekennzeichnet, daß** ein Anschluß der bewegbaren Teilführungsstrecke (23) zwischen der starren Führungsteilstrecke (35) und der Umlenk-Vorrichtung (24) trennstellenlos erfolgt.

8. Fördereinrichtung nach den Ansprüchen 4 und 5, **dadurch gekennzeichnet, daß** ein Anschluß der Teilführungsstrecke (23) zwischen dem starren falzapparat- bzw. cutterfernen Ende (10) der starren Teilführungsstrecke (35) und der Umlenk-Vorrichtung (24) Trennstellen aufweist.

9. Fördereinrichtung nach den Ansprüchen 1 und 5, **dadurch gekennzeichnet, daß** eine Umlenk-Vorrichtung (24) ein Umlenkrad (51) aufweist, daß die Umlenk-Vorrichtung (24) auf horizontal und/oder vertikal bewegbaren, gestellfesten Tragarmen (53, 54) befestigt ist.

10. Fördereinrichtung nach Anspruch 1, **dadurch gekennzeichnet, daß** die Umlenk-Vorrichtung (24) vertikal bewegbar ist.

## Claims

1. Conveying device (5) with an endless conveyor chain (2) guided in a rigid partial guide section (35) and intended for printed products (1), starting from a folder or cutter and having a deflection apparatus (24) for the conveyor chain (2) close to the folder or cutter and a deflection apparatus (24) for the said chain remote from the folder or cutter, the deflection apparatus (24) being movable horizontally from a first into a second position, **characterized in that** a partial guide section is arranged in parallel in the first and second position of the deflection apparatus (24) in the region of the deflection apparatus (24) close to the folder or cutter.

2. Conveying device according to Claim 1, **characterized in that** the partial guide section is arranged parallel in all positions in the region of the deflection apparatus (24) remote from the folder or cutter.

3. Conveying device according to Claim 1, **characterized in that** parallel conveyor belts (44; 46; 47) are assigned to the first and second positions of the deflection apparatus (24).

4. Conveying device according to Claim 1, **characterized in that** a horizontally movable partial guide section (23) is provided between the rigid partial guide section (35) and the deflection apparatus (24).

5. Conveying device (5) with an endless conveyor chain (2) guided in a rigid partial guide section (35) and intended for printed products (1), starting from a folder or cutter and having a deflection apparatus (24) for the conveyor chain (2) close to the folder or cutter and a deflection apparatus (24) for the said chain remote from the folder or cutter, the deflection apparatus (24) being movable horizontally from a first into a second position, **characterized in that** the deflection apparatus (24) and a fixed-location partial guide section (35) is connected by means of a partial guide section (23) that can be moved horizontally, relative to the partial guide section (35), and in that the deflection apparatus (24) can be moved vertically.

6. Conveying device according to Claims 4 and 5, **characterized in that** the partial guide section (23) at least partially comprises mobile intermediate guide pieces (22; 26) that can be bent.

7. Conveying device according to Claims 4 and 5, **characterized in that** a connection of the movable partial guide section (23) between the rigid partial guide section (35) and the deflection apparatus (24) is seamless.

8. Conveying device according to Claims 4 and 5, **characterized in that** there are divisions in a connection of the partial guide section (23) between the rigid end (10), remote from the folder or cutter, of the rigid partial guide section (35) and the deflection apparatus (24).

9. Conveying device according to Claims 1 and 5, **characterized in that** a deflection apparatus (24) has a deflection pulley (51), in that the deflection apparatus (24) is secured on horizontally and/or vertically movable supporting arms (53, 54) fixed to the frame.

10. Conveying device according to Claim 1, **characterized in that** the deflection apparatus (24) can be moved vertically.

## Revendications

1. Convoyeur (5) avec une chaîne de transport (2) continue, guidée sur une piste de guidage partielle (35) rigide, pour des produits imprimés (1) venant d'un appareil de pliage ou d'une découpeuse, et avec un dispositif de renvoi (24) distant de l'appareil de pliage ou de la découpeuse, agissant sur la chaîne de transport (2), le dispositif de renvoi (24) étant déplaçable horizontalement d'une première à une deuxième position, **caractérisé en ce qu'**une première piste de guidage partielle est disposée, en s'étendant parallèlement, dans la zone du dispositif de renvoi (24) et/ou de la découpeuse éloigné(e) de l'appareil de pliage, dans la première et la deuxième position du dispositif de renvoi (24).

2. Convoyeur selon la revendication 1, **caractérisé en ce que** la piste de guidage partielle est disposée en s'étendant parallèlement à toutes les positions dans la zone du dispositif de renvoi (24) éloigné(e) de l'appareil de pliage ou de la découpeuse.

3. Convoyeur selon la revendication 1, **caractérisé en ce que** des bandes transporteuses (44; 46; 47), s'étendant parallèlement, sont associées à la première et à la deuxième position du dispositif de renvoi (24).

4. Convoyeur selon la revendication 1, **caractérisé en ce qu'**entre la piste de guidage partielle (35) et le dispositif de renvoi (24) est prévue une piste de guidage partielle (23), déplaçable horizontalement.

5. Convoyeur (5) avec une chaîne de transport (2) continue guidée sur une piste de guidage partielle (35) rigide, pour des produits imprimés (1) venant d'un appareil de pliage ou d'une découpeuse, et avec un dispositif de renvoi (24) de la chaîne de transport (2), proche de l'appareil de pliage ou de la découpeuse et un autre éloigné de l'appareil de pliage ou éloigné de la découpeuse, le dispositif de renvoi (24) étant déplaçable horizontalement d'une première à une deuxième position,
**caractérisé en ce que** le dispositif de renvoi (24) et une piste de guidage partielle (35) localement rigide sont reliées, au moyen d'une piste de guidage partielle (23) horizontale, déplaçable par rapport à la piste de guidage partielle (35), et en ce que le dispositif de renvoi (24) est déplaçable verticalement.

6. Convoyeur selon les revendications 4 et 5, **caractérisé en ce que** la piste de guidage partielle (23) est constituée au moins partiellement d'éléments de guidage intermédiaire (22; 26) mobiles, incurvables.

7. Convoyeur selon les revendications 4 et 5, **caractérisé en ce qu'**un raccordement de la piste de guidage partielle (23) et la piste partielle de guidage rigide (35) et le dispositif de renvoi (24) s'effectuent sans point de séparation.

8. Convoyeur selon les revendications 4 et 5, **caractérisé en ce qu'**un raccordement de la piste de guidage partielle (23), entre l'extrémité rigide, distante de l'appareil de pliage ou de la découpeuse, de la piste de guidage partielle (35) rigide et du dispositif de renvoi (24), présente des points de séparation.

9. Convoyeur selon les revendications 1 et 5, **caractérisé en ce qu'**un dispositif de renvoi (24) présente une roue de renvoi (51), en ce que le dispositif de renvoi (24) est fixé sur des bras support (53, 54) déplaçables horizontalement et/ou verticalement, fixés au bâti.

10. Dispositif de transport selon la revendication 1, **caractérisé en ce que** le dispositif de renvoi (24) est déplaçable verticalement.
